# EUROPÄISCHE PATENTSCHRIFT

(11) **EP 3 003 634 B1**
(45) Veröffentlichungstag und Bekanntmachung des Hinweises auf die Patenterteilung: **09.05.2018**
(21) Anmeldenummer: 14728887.2
(22) Anmeldetag: 28.05.2014
(51) Int. Cl.: B23K 26/142, B23K 26/21, B23K 26/70, B08B 15/00, B23K 26/14

(54) **CROSSJET-ANORDNUNG SOWIE VERFAHREN ZUM WEGFÜHREN VON KONTAMINATIONEN**
CROSSJET ARRANGEMENT AND METHOD FOR REMOVAL OF CONTAMINANTS
ARRANGEMENT DE JET CROISÉ ET PROCÉDÉ D'ENLÈVEMENT DE CONTAMINANTS

(30) Priorität: 29.05.2013 DE 202013102339 U
(43) Veröffentlichungstag der Anmeldung: 13.04.2016
(73) Patentinhaber: Reis Group Holding GmbH & Co. KG, 63785 Obernburg (DE)
(72) Erfinder: HEINRICI, Axel, 52068 Aachen (DE); TESMER, Armin, 52134 Herzogenrath (DE)
(74) Vertreter: Stoffregen, Hans-Herbert
(86) Internationale Anmeldenummer: PCT/EP2014/061075
(87) Internationale Veröffentlichungsnummer: WO 2014/191463

(56) Entgegenhaltungen:
- EP-A2- 1 016 494
- US-A1- 2004 026 388
- US-A1- 2009 107 966

## Beschreibung

Die Erfindung bezieht sich auf eine Crossjet-Anordnung zum Erzeugen eines zwischen einer Bearbeitungseinrichtung, wie Laser, und einem Bearbeitungsbereich, wie Schweißbereich, durch einen Wegführbereich geführten Gasstrom zum Wegführen von im Bearbeitungsbereich entstehenden und sich in Richtung der Bearbeitungseinrichtung bewegenden Kontaminationen, wie Partikel oder Dämpfe. Auch nimmt die Erfindung Bezug auf ein Verfahren zum Wegführen von sich von einem Bearbeitungsort in Richtung einer Bearbeitungseinrichtung bewegenden Kontaminationen mittels eines Gasstroms.

Bei verschiedenen Fertigungsprozessen wie Bohren, Schleifen, Drehen, Fräsen, Schweißen oder Schneiden verschiedener Werkstoffe fallen Späne, Spritzer oder Rauch, Gase oder Plasmaemissionen an, die zu Verunreinigungen der Bearbeitungseinrichtung führen und damit ihre Funktion beeinflussen können. Um Verunreinigungen von Bearbeitungseinrichtungen wie Laser zu verhindern oder zumindest abzuschwächen, ist es bekannt, zwischen dem Bearbeitungsbereich und der Bearbeitungseinrichtung, d. h., deren besonders empfindlichen Bereichen, wie Austrittsfenster für Laserstrahlung beim Laserschneiden oder -schweißen, einen Gasstrom einzusetzen. Dabei wird gezielt ein Gasstrom quer zur Hauptflugrichtung der Kontaminationen in einer sogenannten Crossjet-Anordnung erzeugt, um die Kontaminationen mitzureißen und somit eine Verschmutzung der Bearbeitungseinrichtung zumindest weitgehend zu verhindern.

Der Verschmutzungsmechanismus besteht in einem Stofftransport vom Bearbeitungsprozess zur Bearbeitungseinrichtung. Der Gasstrom bzw. Crossjet soll die Verunreinigungen auf ihrem Weg zu der Bearbeitungseinrichtung hin erfassen und ablenken, so dass diese die Bearbeitungseinrichtung nicht mehr oder zumindest die besonders zu schützenden Bereiche nicht mehr erreichen können.

Insbesondere beim Lasertiefschweißen können sich Metallkügelchen oder flüssige Metalltropfen mit hoher Geschwindigkeit vom Prozess in Richtung des Laseraustrittsfensters bewegen.
Der Gasstrom muss in diesem Fall soweit ausgedehnt sein, dass der gesamte besonders empfindliche Bereich der Bearbeitungseinrichtung geschützt ist. Ferner muss die Geschwindigkeit des Gasstroms so groß sein, dass eine hinreichende Ablenkung der Metallkügelchen bzw. -tropfen erreicht wird. Die maximal zur Verfügung stehende Gasmenge ist in der Anwendung durch die vorhandenen Leitungsquerschnitte und den anstehenden Luftdruck begrenzt. Gleiches gilt für die Strömungsgeschwindigkeit. Daher lässt sich in der Praxis häufig kein vollständiger Schutz der Bearbeitungseinrichtung erzielen, so dass die Bearbeitungseinrichtung kontaminiert wird. Somit ist es erforderlich, dass die entsprechenden Bauteile nach einer vorgegebenen Anzahl von Anwendungen gereinigt oder ausgetauscht werden.
Der EP-1 607 167 A1 ist eine Crossjet-Vorrichtung für einen Laserhybrid-Schweißprozess zu entnehmen. Ein Gehäuse weist eine Öffnung auf, die von der Laserstrahlung durchsetzt wird. Quer zu dieser wird eine Crossjet-Strahlung erzeugt, wobei die Austrittsöffnung der Strahlung einen kleineren Durchmesser als die Eintrittsöffnung aufweist.
Eine Laval-Düse für eine Crossjet-Vorrichtung ist aus der DE 203 18 461 U1 bekannt.

Eine Crossjet-Anordnung wie im Oberbegriff des Anspruchs 1 ist der US 2004/0026388 A1 zu entnehmen, bei der ein Gasstrom quer zu einem Laserstrahl einer Laserschweißvorrichtung geführt wird. Um bei der Foto-Ablation entstehende Partikel wegzuführen, wird nach der US 2009/0107966 A1 ein Heliumstrom parallel zur Ablationsstrahlung geführt.

Eine Koaxialjet-Anordnung ist der EP 1 016 494 A2 zu entnehmen. Dabei wird ein Gasstrom mehrfach koaxial zu einem Laserstrahl geführt. Auf den Gasstrom wirken mittels eines Flügelrads Zentrifugalkräfte ein.

Der vorliegenden Erfindung liegt die Aufgabe zu Grunde, eine Crossjet-Anordnung sowie ein Verfahren der eingangs genannten Art so weiterzubilden, dass mit konstruktiv einfachen Maßnahmen ein Gasstrom erzeugt wird, mit dem im hinreichenden Umfang Kontaminationen derart erfasst bzw. abgelenkt werden, dass eine Bearbeitungseinrichtung vor Verschmutzungen geschützt ist.

Zur Lösung der Aufgabe sieht die Erfindung im Wesentlichen vor, dass der Gasstrom über zumindest eine Umlenkeinrichtung mehrfach durch den Wegführbereich derart geführt ist, dass der Gasstrom mehrfach den zwischen der Bearbeitungseinrichtung und dem Bearbeitungsbereich verlaufenden Weg kreuzt, wobei die Umlenkeinrichtung eine den Gasstrom führende spiralartig verlaufende Bahn mit mehreren Windungen aufweist und Windungen in dem Wegführbereich unterbrochen sind, oder die Umlenkeinrichtung mäanderformig verlaufende Umlenkungen oder Kanäle aufweist, die im Wegführbereich unterbrochen sind.

Aufgrund der erfindungsgemäßen Lehre wird der zum Ablenken der Kontamination benutzte Gasstrom mehrfach durch den Wegführbereich geführt, so dass Gasdruck und Gasmenge, die zum Wegführen bzw. Ablenken der Kontaminationen benutzt werden, solchen entsprechen können, die bei bekannten Anordnungen zum Einsatz gelangen, gleichzeitig jedoch ein höherer Grad der Ablenkung und damit ein Schutz für die Bearbeitungseinrichtung erfolgt. Erfindungsgemäß wird der Gas- wie Luftstrom so umgelenkt, dass die Verunreinigungen auf ihrem Weg zur Bearbeitungseinrichtung vom Gasstrom mehrfach oder auf einer größeren Weglänge erfasst bzw. beeinflusst werden, wodurch eine deutliche Verbesserung der Schutzwirkung erzielt wird oder bei einer im Vergleich zum Stand der Technik benutzten Anordnung ein geringerer Gasverbrauch erforderlich ist, um die gleiche Schutzwirkung zu erzielen.

Dabei können die Windungen eine Ebene aufspannen, die insbesondere geneigt zur Bewegungsrichtung der Kontamination verläuft.

Es besteht jedoch auch die Möglichkeit, die spiralartig verlaufende Bahn dreidimensional auszubilden.

Bei einer dreidimensional verlaufenden spiralartig verlaufenden Bahn sind die Austritts- bzw. Eintrittsöffnungen in Bewegungsrichtung der Kontaminationen übereinander angeordnet.

Um den Gasstrom umzulenken, damit dieser mehrfach den Wegführbereich durchsetzt, sieht ein weiterer erfindungsgemäßer Vorschlag vor, dass die Umlenkeinrichtung mäanderförmig wirkende Umlenkungen oder mäanderförmig verlaufende Kanäle aufweist, die im Wegführbereich unterbrochen sind.

Insbesondere ist vorgesehen, dass die Umlenkeinrichtung in einem vorzugsweise quaderförmigen Gehäuse ausgebildet ist, das einen den Wegführbereich begrenzenden Ausschnitt aufweist.

Bevorzugterweise ist vorgesehen, dass der Ausschnitt zwei parallel zueinander verlaufende Begrenzungen aufweist, die von den Ein- bzw. Austrittsöffnungen der Windungen der spiralartig verlaufenden Bahn bzw. der mäanderförmigen Kanäle durchsetzt sind bzw. in denen im Schnitt kreisabschnittförmige Aussparungen als die mäanderförmig wirkenden Umlenkungen ausgebildet sind.

Ein Verfahren zum Wegführen von sich von einem Bearbeitungsort in Richtung einer Bearbeitungseinrichtung bewegenden Kontaminationen mittels eines Gasstroms zeichnet sich dadurch aus, dass der Gasstrom zum mehrfachen Durchsetzen der Richtung derart umgelenkt wird, dass der Gasstrom mehrfach den zwischen der Bearbeitungseinrichtung und dem Bearbeitungsbereich verlaufenden Weg kreuzt.

Insbesondere ist vorgesehen, dass der Gasstrom durch Abschnitte einer spiralförmig verlaufenden Bahn oder mittels mäanderförmig ausgebildeter Führungen umgelenkt wird.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine erste Ausführungsform einer Crossjet-Anordnung,
- Fig. 2: einen Schnitt entlang der Linie II-II in Fig. 1,
- Fig. 3: einen Ausschnitt der Anordnung gemäß Fig. 1,
- Fig. 4: eine zweite Ausführungsform einer Crossjet-Anordnung,
- Fig. 5: einen Schnitt entlang der Linie V-V in Fig. 4,
- Fig. 6: Ansicht der Anordnung gemäß Fig. 4 in Richtung Pfeil 6,
- Fig. 7: eine Draufsicht auf die Anordnung gemäß Fig. 4,
- Fig. 8: eine dritte Ausführungsform einer Crossjet-Anordnung,
- Fig. 9: einen Schnitt entlang der Linie IX-IX in Fig. 8 und
- Fig. 10: eine Variante der Anordnung gemäß Fig. 8.

In den Figuren sind rein schematisch verschiedene Ausführungsformen von Crossjet-Anordnungen dargestellt, mit denen ein Gas- wie Luftstrom derart geführt wird, dass die von einem Bearbeitungsbereich in Richtung einer Bearbeitungseinrichtung sich bewegenden Kontaminationen, wie Schmutzpartikel, gezielt weggeführt werden, um die Bearbeitungseinrichtung zu schützen. Bei dieser kann es sich um eine Lasereinrichtung wie Laserschweißeinrichtung handeln, mit der im Bearbeitungsbereich, also Schweißbereich Werkstücke geschweißt werden sollen, ohne dass hierdurch die erfindungsgemäße Lehre eingeschränkt wird.

Um Kontaminationen - nachstehend vereinfacht Schmutzpartikel genannt - von der Bearbeitungseinrichtung, wie Austrittsfenster eines Lasers, zu schützen, ist es bekannt, Crossjet-Anordnungen zu verwenden, wobei ein Luftstrom quer zur Flug- bzw. Hauptflugrichtung der Schmutzpartikel zwischen dem Bearbeitungsort und der Bearbeitungseinrichtung strömt, um die Schmutzpartikel abzulenken und somit diese zu hindern, auf die Bearbeitungseinrichtung zu treffen bzw. deren zu schützende Bereiche.

Erfindungsgemäß ist vorgesehen, dass ein entsprechender Gasstrom - nachstehend Luftstrom genannt - mehrfach im Bereich der sich in Richtung der Bearbeitungseinrichtung bewegenden Schmutzpartikel umgelenkt wird, so dass infolgedessen die Schmutzpartikel mehrfach dem Luftstrom ausgesetzt sind mit der Folge, dass ein Ablenken der Schmutzpartikel und damit Schützen der Bearbeitungseinrichtung weitgehend sichergestellt ist.

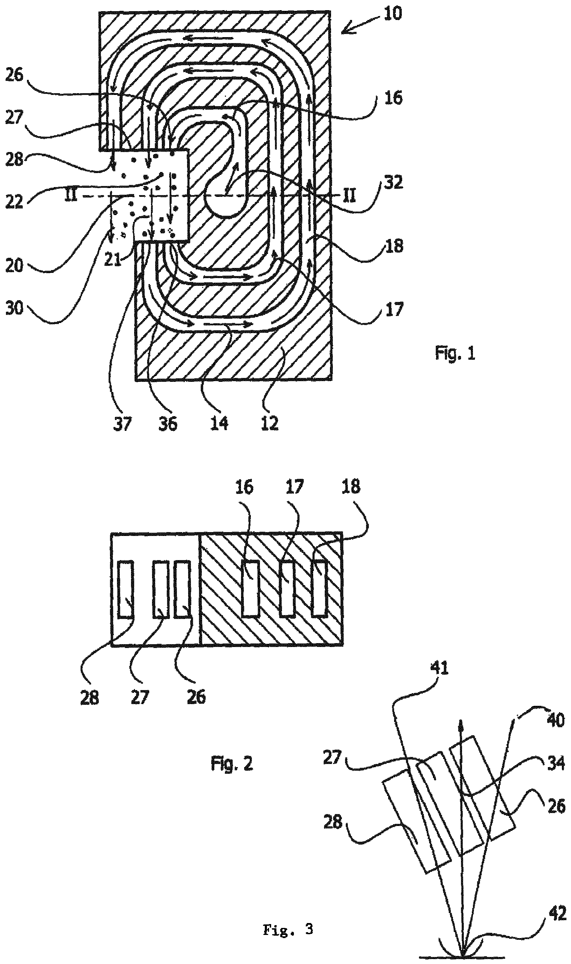

Um eine diesbezügliche mehrfache Umlenkung des Luftstroms zu erreichen, sieht die Erfindung beispielhaft mehrere Möglichkeiten vor. So ist bei der Crossjet-Anordnung 10 gemäß der Fig. 1 bis 3 in einem Gehäuse 12 ein spiralförmig verlaufender Kanal 14 ausgebildet, der mehrere Windungen 16, 17, 18 aufweist, die in einem als Wegführbereich bezeichneten Bereich 20 unterbrochen sind, der im Ausführungsbeispiel von der Laserstrahlung durchsetzt wird. Dabei verläuft in Fig. 1 die Laserstrahlung in die Zeichenebene hinein. Von dem Bearbeitungsbereich wegeschleuderte Verschmutzungen weisen demzufolge eine Flugrichtung auf, die aus der Zeichenebene heraustritt. Die entsprechenden Schmutzpartikel sind beispielhaft als offene Kreise und mit dem Bezugszeichen 22 gekennzeichnet.

Die Windungen 16, 17, 18 sind im Wegführbereich 20 unterbrochen, wobei die Austrittsöffnungen 26, 27 der Windungen 16, 17 auf Eintrittsöffnungen 36, 37 ausgerichtet sind, die gegenüberliegend zu den Eintrittsöffnungen 26, 27 verlaufen, wie auch die Schnittdarstellung der Fig. 1 zeigt. Der die Austrittsöffnung 28 der Windung 18 verlassende Luftstrom wird sodann seitlich an dem Gehäuse 12 vorbeigeführt, wie der Pfeil 30 verdeutlicht. Ferner ist erkennbar, dass eine Luftdruckquelle mit dem Anfang der Windung 16 verbunden ist. Der Bereich bildet die Luftzuführung 32.

Damit die Schmutzpartikel 22 stets von einem aus den Austrittsöffnungen 26, 27, 28 austretenden Luftstrom erfasst werden, können die in einer Ebene verlaufenden Windungen 16, 17, 18 geneigt zur Hauptflugrichtung 34 der Schmutzpartikel verlaufen (Fig. 3). Die aus den Austrittsöffnungen 26, 27, 28 austretende Luft erfasst somit unabhängig von der Flugbahn die Schmutzpartikel, da durch die Neigung der im Ausführungsbeispiel rechteckförmigen Austrittsöffnungen 26, 27, 28 eine vollständige Abdeckung der Flugrichtungen der Schmutzpartikel erfolgt.

Aus der Fig. 3 ergibt sich des Weiteren, dass die Crossjet-Anordnung 10 mit der über die Austrittsöffnungen 26, 27, 28 austretenden Luft zwischen einer Bearbeitungseinrichtung wie Laserquelle 40 und einem Prozessort 42 (Bearbeitungsbereich) verläuft.

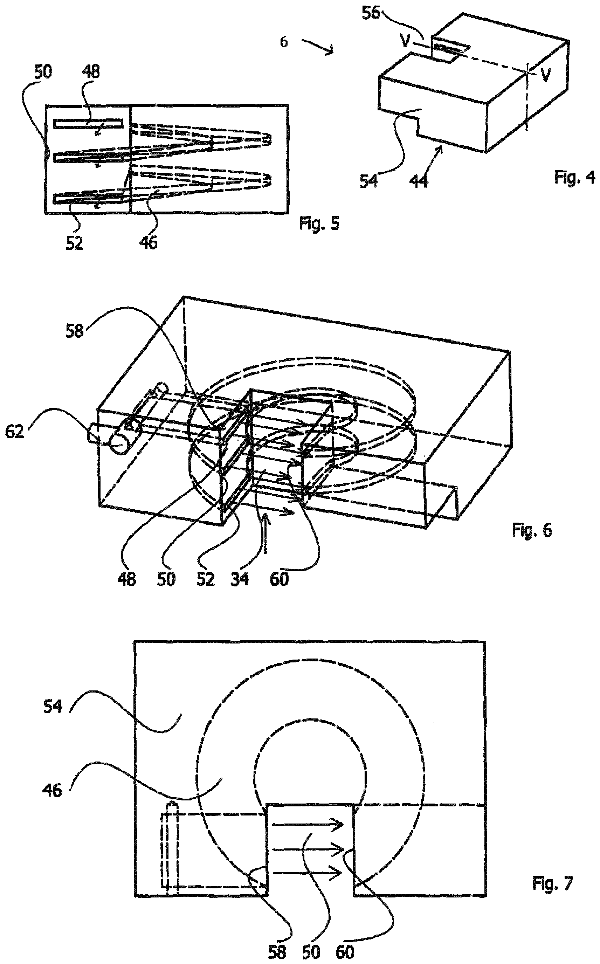

Bei dem Ausführungsbeispiel der Fig. 4 bis 7 handelt es sich um eine Crossjet-Anordnung 44, in der ebenfalls ein spiralförmig verlaufender Kanal 46 ausgebildet ist. Der spiralförmige Kanal 46 verläuft dreidimensional, so dass die Austrittsöffnungen 48, 50, 52 in Bezug auf die Hauptflugrichtung der Verschmutzungen übereinander angeordnet sind.

Aus den Darstellungen der Fig. 4, 6 und 7 ist erkennbar, dass die Crossjet-Anordnung 44 ein Gehäuse 54 mit einem Ausschnitt 56 aufweist, der den Wegführbereich bildet. Die Austrittsöffnungen 48, 50, 52 des spiralförmigen Kanals 46 verlaufen in einer Begrenzungswandung 58 des Ausschnitts 56. In einer gegenüberliegenden parallel zu der Wandung 58 verlaufenden Wandung 60 sind entsprechende Eintrittsöffnungen vorgesehen, wobei entsprechend dem Ausführungsbeispiel der Fig. 1 bis 3 der Austrittsöffnung 48 bzw. 50 jeweils eine in der Wandung 60 vorhandene in den spiralförmig verlaufenden Kanal 46 übergehende Eintrittsöffnung zugeordnet ist. Die aus der Austrittsöffnung 52 austretende Luft strömt sodann ins Freie. In der Fig. 6 ist des Weiteren ein Luftanschluss 62 eingezeichnet, über den Luft dem spiralförmig verlaufenden Kanal 46 zugeführt wird.

Im Übrigen sind sämtliche Figuren selbsterklärend und verdeutlichen die erfindungsgemäßen Merkmale klar.

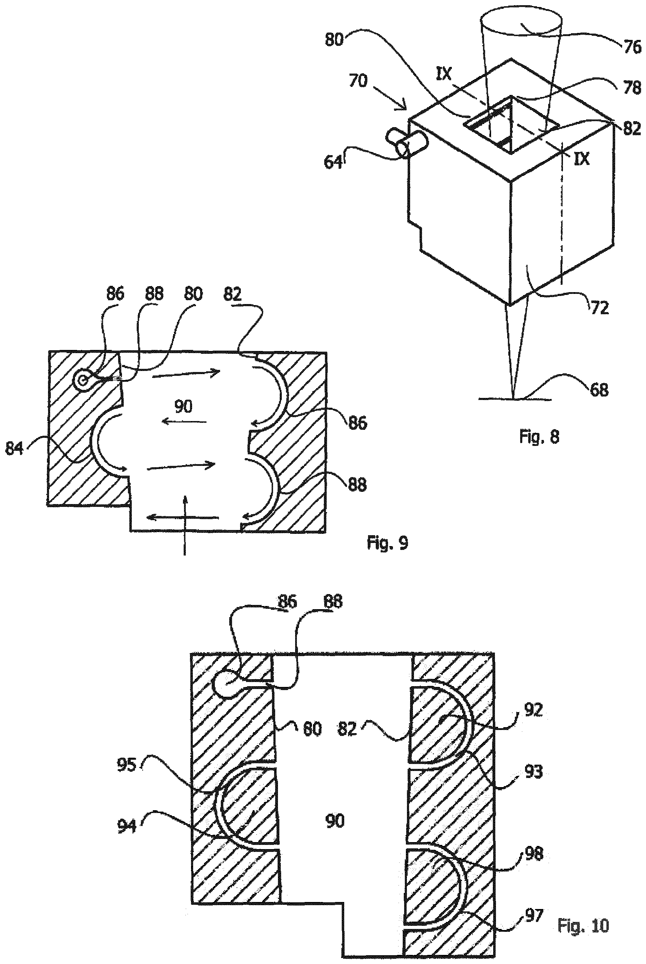

Nach dem Ausführungsbeispiel der Fig. 8 bis 10 erfolgt eine mäanderförmige Ablenkung eines Luftstroms, um von einem Bearbeitungsort, wie Schweißort 68, weggeschleuderte Partikel von einer Bearbeitungseinrichtung, wie Laserquelle 76, fernzuhalten. Hierzu ist zwischen dem Bearbeitungsort 68 und der Laserquelle 76 eine eine dritte Ausführungsform bildende Crossjet-Anordnung 70 mit einem Gehäuse 72 angeordnet, das eine im Schnitt rechteckförmige Durchgangsöffnung 78 aufweist, die von der Laserstrahlung und somit auch von den Schmutzpartikeln durchsetzt wird. Gegenüberliegende Wandungen 80, 82 der Öffnung 78 weisen kreisabschnittsförmige Einbuchtungen oder Vertiefungen 84, 86, 88 auf, so dass über einen Luftanschluss 86 einem Kanal zugeführte und aus diesem austretende Luft über die Einbuchtungen 84, 86, 88 umgelenkt wird mit der Folge, dass die zwischen den Wandungen 80, 82, die einen Wegführbereich 90 begrenzen, strömende Luft die im Wegführbereich 90 eintretenden Schmutzpartikel umlenken und somit wegführen kann.

Sind nach dem Ausführungsbeispiel der Fig. 9 die kreisabschnittsförmigen Vertiefungen 84, 86, 88 wegführbereichsseitig offen, so besteht nach dem Ausführungsbeispiel der Fig. 10 die Möglichkeit, dass durch Einsätze oder Blenden 92, 94, 96 eine mäanderförmig verlaufende Führung, also Kanalabschnitte für die den Wegführbereich 90 durchströmende Luft erreicht wird.

Aufgrund der erfindungsgemäßen Lehre werden die Kontaminationen auf ihrem Weg zu einer Bearbeitungseinrichtung wie Laser mehrfach dem Luftstrom ausgesetzt bzw. durch Schrägstellung der Crossjet-Anordnung 10 gemäß der Fig. 1 bis 3 erfolgt auf einem relativ langen Weg eine Wechselwirkung zwischen Luftstrom und den Verschmutzungen.

Durch diese Maßnahmen erfolgt eine deutlich stärkere Ablenkung der Kontaminationen bzw. dann, wenn eine Ablenkung entsprechend dem Stand der Technik gewünscht wird, ist ein geringer Luftverbrauch erforderlich. Eine gesteigerte Ablenkung ist im Vergleich zum Stand der Technik bei reduziertem Luftverbrauch erreichbar. Durchsetzen die Kontaminationen entsprechend der Ausführungsbeispiele der Fig. 4 bis 10 mehrfach den Luftstrom, ergibt sich gleichfalls wahlweise eine deutlich stärkere Ablenkung der Kontaminationen oder ein deutlich geringerer Gasverbrauch oder bei gesteigerter Ablenkung ein reduzierter Luftverbrauch im Vergleich zum Stand der Technik.

Bezüglich der Mäanderanordnung nach den Fig. 8 bis 10 ist es unbeachtlich, dass die Austrittsrichtungen aus den Wandungen 80, 82 entgegengesetzt sind, da durch die Luftreibung bei jedem Kreuzen des Luftstroms eine Verringerung der Fluggeschwindigkeitskomponente der Verschmutzungen in Richtung der Bearbeitungseinrichtung erfolgt.

Bei der Mäanderanordnung ergibt sich im Vergleich zu der Spiralanordnung der Fig. 1 bis 7 der Vorteil, dass der Luftstrom auf einer deutlich kürzeren Länge in dem Gehäuse geführt werden muss. Hierdurch ergibt sich der Vorteil, dass die Anordnung 70 bei geeigneter Auslegung mit geringem Gewicht gebaut werden kann. Die Anzahl der Umlenkungen bzw. der durch die Umlenkung bedingte Geschwindigkeitsverlust fällt geringer aus.

## Patentansprüche

1. Crossjet-Anordnung (10, 44, 70) zum Erzeugen eines zwischen einer Bearbeitungseinrichtung (40, 76), wie Laser, und einem Bearbeitungsbereich (42, 68), wie Schweißbereich, durch einen Wegführbereich (20, 56, 90) geführten Gasstroms zum Wegführen von im Bearbeitungsbereich entstehenden und sich in Richtung der Bearbeitungseinrichtung bewegenden Kontaminationen, wie Partikel oder Dämpfe,
**dadurch gekennzeichnet,**
**dass** der Gasstrom über zumindest eine Umlenkeinrichtung (14, 16, 84, 86, 88) mehrfach durch den Wegführbereich derart geführt ist, dass der Gasstrom mehrfach den zwischen der Bearbeitungseinrichtung (40, 76) und dem Bearbeitungsbereich (42, 68) verlaufenden Weg kreuzt, wobei die Umlenkeinrichtung eine den Gasstrom führende spiralartig verlaufende Bahn (14, 46) mit mehreren Windungen (16, 17, 18) aufweist und Windungen in dem Wegführbereich (20) unterbrochen sind, oder die Umlenkeinrichtung (70) mäanderförmig verlaufende Umlenkungen (84, 86, 88) oder Kanäle aufweist, die im Wegführbereich (90) unterbrochen sind.

2. Crossjet-Anordnung nach Anspruch 1,
**dadurch gekennzeichnet,**
**dass** die Windungen (16, 17, 18) eine Ebene aufspannen, die geneigt zur Hauptbewegungsrichtung (34) der Kontaminationen verläuft.

3. Crossjet-Anordnung nach Anspruch 1,
**dadurch gekennzeichnet,**
**dass** die spiralartig verlaufende Bahn (46) dreidimensional ausgebildet ist.

4. Crossjet-Anordnung nach Anspruch 3,,
**dadurch gekennzeichnet,**
**dass** bei der dreidimensional ausgebildeten spiralartig verlaufenden Bahn (46) die Austritts- bzw. Eintrittsöffnungen (48, 50, 52) in Bewegungsrichtung der Kontaminationen übereinander angeordnet sind.

5. Crossjet-Anordnung nach Anspruch 1,
**dadurch gekennzeichnet,**
**dass** die Umlenkeinrichtung in einem vorzugsweise quaderförmigen Gehäuse (34, 72) ausgebildet ist, das einen den Wegführbereich (90) begrenzenden Ausschnitt (56, 78) aufweist.

6. Crossjet-Anordnung nach Anspruch 5, **dadurch gekennzeichnet,**
**dass** der Ausschnitt (56, 78) zwei parallel zueinander verlaufende Begrenzungen (58, 60, 80, 82) aufweist, die von den Ein- bzw. Austrittsöffnungen (16, 17, 18, 36, 37, 48, 50, 52) der Windungen (44, 46) der spiralartig verlaufenden Bahn bzw. der mäanderförmigen Kanäle (93, 95, 97) durchsetzt sind bzw. in denen im Schnitt kreisabschnittförmige Aussparungen (84, 86, 88) als die mäanderförmigen Umlenkungen ausgebildet sind.

7. Verfahren zum Wegführen von sich von einem Bearbeitungsort (42, 68) in Richtung einer Bearbeitungseinrichtung bewegenden Kontaminationen mittels eines Gasstroms,
**dadurch gekennzeichnet,**
**dass** der Gasstrom zum mehrfachen Durchsetzen der Richtung derart umgelenkt wird, dass der Gasstrom mehrfach den zwischen der Bearbeitungseinrichtung (40, 76) und dem Bearbeitungsbereich (42, 68) verlaufenden Weg kreuzt.

8. Verfahren nach Anspruch 7,
**dadurch gekennzeichnet,**
**dass** der Gasstrom durch Abschnitte einer spiralförmig verlaufenden Bahn (14, 46) oder mittels mäanderförmig ausgebildeter Führungen umgelenkt wird.

## Claims

1. The crossjet arrangement (10, 44, 70) for generating a gas flow between a working device (40, 76) such as a laser and a working area (42, 68) such as a welding area and conducted thorough a removal area (20, 56, 90) for removing contaminations such as particles or vapors produced in the working area and moving in the direction of the working device,
**characterized in that**
the gas flow is multiply conducted through the removal area via at least one deflection device (14, 16, 84, 86, 88), the gas flow is multiply crossing the path between the working device (40, 76) and the working area (42, 68), wherein the deflection device comprises a track (14, 46) that guides the gas flow in a helical manner and comprises several windings (16, 17, 18), wherein the windings are interrupted in the removal area (20) or the deflection device (70) comprises meandering deflections (84, 86, 88) or conduits that are interrupted in the removal area (90).

2. The crossjet arrangement according to claim 1,
**characterized in that**
the windings (16, 17, 18) can open a plane running at an incline to the main direction of movement (34) of the contaminations.

3. The crossjet arrangement according to claim 1,
**characterized in that**
the helically running conduit (46) is constructed three-dimensionally.

4. The crossjet arrangement according to claim 3,
**characterized in that**
the exit and entrance openings (48, 50, 52) in the three-dimensional, helically running conduit (46) are arranged superposed over each other in the direction of movement of the contaminations.

5. The crossjet arrangement according to claim 1,
**characterized in that**
the deflection device is constructed in a preferably parallelepipedal housing (34, 72) that comprises a section (56, 78) limiting the removal area (90).

6. The crossjet arrangement according to claim 5,
**characterized in that**
the section (56, 78) comprises two delimitations (58, 60, 80, 82) running parallel to one another through which the entrance and exit openings (16, 17, 18, 36, 37, 48, 50, 52) of the windings (44, 46) of the helically running track and/or meandering conduits (93, 95, 97) run and in which recesses (84, 86, 88) with a section with the shape of a circular section are constructed as the meandering deflections.

7. The method for removal of contaminants moving from a working site (42, 68) in the direction of a working device by a gas flow,
**characterized in that**
the gas flow is multiply deflected for passing through the direction, that the gas flow is multiply crossing the path between the working device (40, 76) and the working area (42, 68).

8. The method according to claim 7,
**characterized in that**
the gas flow is deflected by sections of a helically running track (14, 46) or by meandering guides.

## Revendications

1. Arrangement de jet croisé (10, 44, 70) pour produire un flux de gaz guidé entre un dispositif d'usinage (40, 76) tel un laser, et une zone d'usinage (42, 68) telle une zone de soudure, au travers d'une zone d'enlèvement (20, 56, 90) pour enlever les contaminants, tels que particules ou vapeurs, apparaissant dans ladite zone d'usinage et se dirigeant vers ledit dispositif d'usinage,
**caractérisé en ce**
**que** le flux de gaz est guidé plusieurs fois à travers la zone d'enlèvement par le biais d'au moins un dispositif de déviation (14, 16, 84, 86, 88) de sorte que le flux de gaz croise plusieurs fois le chemin s'étendant entre le dispositif d'usinage (40, 76) et la zone d'usinage (42, 68), sachant que le dispositif de déviation présente un circuit en forme de spirale (14, 46) guidant le flux de gaz et doté de plusieurs spires (16, 17, 18) et que lesdites spires sont interrompues dans la zone d'enlèvement (20) ou que le dispositif de déviation (70) présente des déviations en forme de méandres (84, 86, 88) ou des canaux qui sont interrompus dans la zone d'enlèvement (90).

2. Arrangement de jet croisé selon la revendication 1,
**caractérisé en ce**
**que** les spires (16, 17, 18) sous-tendent un plan qui est incliné par rapport au sens de déplacement principal (34) des contaminants.

3. Arrangement de jet croisé selon la revendication 1,
**caractérisé en ce**
**que** le circuit en forme de spirale (46) est conçu de manière tridimensionnelle.

4. Arrangement de jet croisé selon la revendication 3,
**caractérisé en ce**
**que**, dans le circuit en forme de spirale (46) conçu de manière tridimensionnelle, les orifices de sortie ou d'entrée (48, 50, 52) sont disposés les uns au-dessus des autres dans le sens de déplacement des contaminants.

5. Arrangement de jet croisé selon la revendication 1,
**caractérisé en ce**
**que** le dispositif de déviation est conçu dans un boîtier de préférence de forme parallélépipédique (34, 72) qui présente une découpe (56, 78) délimitant la zone d'enlèvement (90).

6. Arrangement de jet croisé selon la revendication 5,
**caractérisé en ce**
**que** la découpe (56, 78) présente deux délimitations (58, 60, 80, 82) parallèles l'une par rapport à l'autre qui sont traversées par les orifices d'entrée ou de sortie (16, 17, 18, 36, 37, 48, 50, 52) des spires (44, 46) du circuit en forme de spirale ou des canaux en forme de méandres (93, 95, 97) ou dans lesquelles des évidements (84, 86, 88) en forme de sections de cercle en coupe sont conçus comme déviations en forme de méandres.

7. Procédé d'enlèvement de contaminants se déplaçant d'une zone d'usinage (42, 68) vers un dispositif d'usinage, au moyen d'un flux de gaz,
**caractérisé en ce**
**que** le flux de gaz pour traverser plusieurs fois le sens est dévié de sorte à croiser plusieurs fois le chemin s'étendant entre le dispositif d'usinage (40, 76) et la zone d'usinage (42, 68).

8. Procédé selon la revendication 7,
**caractérisé en ce**
**que** le flux de gaz est dévié par des sections d'un circuit en forme de spirale (14, 46) ou au moyen de guidages conçus en forme de méandres.
